# EUROPÄISCHE PATENTANMELDUNG

(11) **EP 0 673 755 A1**
(43) Veröffentlichungstag der Anmeldung: **27.09.1995**
(21) Anmeldenummer: 95103627.6
(22) Anmeldetag: 14.03.1995
(51) Int. Cl.: B32B 7/02, B32B 27/08

(54) **Verbindung zwischen einem elastischen Gummiteil mit einem harten Kunststoffteil**

(30) Priorität: 22.03.1994 DE 9404859 U
(71) Anmelder: Diehl Remscheid GmbH & Co., D-42857 Remscheid (DE)
(72) Erfinder: Haberland, Norbert, Dr. Dipl.-Chem.-Ing., D-53881 Euskirchen (DE); Engel, Michael, D-54597 Neuendorf (DE)
(74) Vertreter: Hofmann, Gerhard, Dipl.-Ing. Patentassessor

(57) **Zusammenfassung**

Eine wasserdichte und kostengünstig herstellbare, unmittelbare Verbindung zwischen einem elastischen Teil und einem harten Kunststoffteil besteht aus einer speziellen Werkstoffauswahl, die durch Einfluß von Druck und Temperatur zustande kommt. Hierzu besteht das elastische Teil (1) aus einem thermoplastischen Elastomer (TPE) und aus dem harten Kunststoffteil (10) aus Polypropylen oder Polyamid. Eine zusätzliche, adhäsive Verbindungstechnik, wie Verwendung von Klebstoffen, Haftmittel, ist daher nicht erforderlich.

## Beschreibung

Die Erfindung bezieht sich auf eine Verbindung zwischen einem elastischen Teil mit einem harten Kunststoffteil.

Derartige Verbindungen erfolgen üblicherweise durch zusätzliche adhäsive Verbindungstechniken, wie Verwendung von Klebstoffen, Haftmittel oder ähnliches, oder durch formschlüssige Verbindungen.
Problematisch bei einer derartigen Verbindung ist die Wasserdichtigkeit. Entweder besteht eine nur teilweise Verbindung oder eine Klebeschicht löst sich partiell, so daß Feuchtigkeit zwischen dem Gummiteil und dem Kunststoffteil hindurchtreten kann.

Aufgabe der Erfindung ist es, eine Verbindung vorzuschlagen zwischen einem elastischen Teil und einem harten Kunststoffteil die wasserdicht und kostengünstig herstellbar ist.

Die Erfindung löst diese Aufgabe entsprechend den kennzeichnenden Merkmalen des Anspruches 1.

Eine vorteilhafte Weiterbildung der Erfindung ist dem Unteranspruch zu entnehmen.

Durch die entsprechende Materialauswahl bezüglich des elastischen Teiles aus einem thermoplastischen Elastomer (TPE) und dem aus Polypropylen oder Polyamid bestehenden Kunststoffteil ist unter Einfluß von Druck und Temperatur gewährleistet, daß die Verbindungsflächen unmittelbar und vollständig miteinander zu verbinden sind. Es besteht also eine, auf makromolekulare Interpenetration beruhende Bindung zwischen dem elastischen Gummiteil und dem Kunststoffteil.

Demzufolge entfällt eine sonst übliche, zusätzliche adhäsive Verbindungstechnik, wie Verwendung von Klebstoffen oder Haftmittel etc.

Ausführungsbeispiele der Erfindung sind an Hand der Zeichnung nachstehend beschrieben.

Es zeigt
Figuren 1 bis 3 in schematischer Darstellung die Verbindung zwischen einem weichen Teil und einem harten Kunststoffteil und
Figur 4 die Verbindung zwischen einem Balg und einem Klip.

Ein Balg 1 aus einem thermoplastischen Elastomer (TPE) weist einen Verbindungsteil 5 auf. Dieser besteht aus einem Rohrabschnitt 6, einem Bund 2, einem Bundabschnitt 7 und einer Lippe 8. Zur Bildung einer Tasche 9 zur Aufnahme eines randseitigen Abschnitts 19 eines Flansches 14 eines Klips 10 verläuft die Lippe 8 etwa parallel zum Bund 2.

Der Klip 10 aus besitzt den Flansch 14 und besteht aus einem harten Kunststoff, nämlich Polypropylen oder Polyamid. Der Klip 10 ist entlang seiner Außenfläche, zwischen den Bezugszahlen 11 bis 12, durch eine auf makromolekulare Interpenetration beruhende Bindung in der mit 13 beispielhaft bezeichneten Schicht von Balg 1 und Klip 10 verbunden.

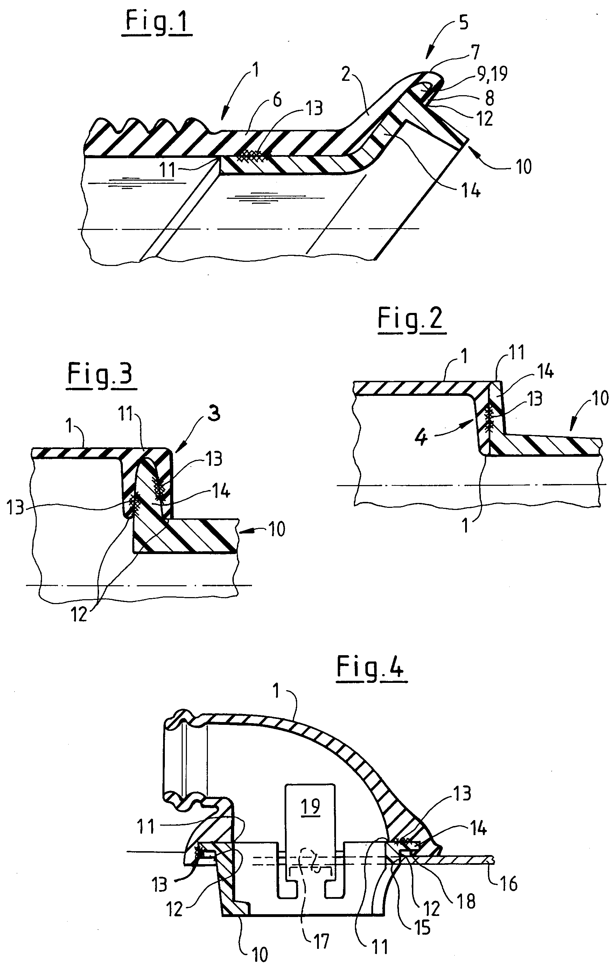

Nach den Figuren 2 bis 4 liegen dementsprechende molekulare Bindungen vor, wobei der Balg 1 und der Klipp 10 geometrisch abweichende Bindungsflächen aufweisen.

L-förmige Flansche 4 von Balg 1 und Klip 10 sind nach Figur 2 miteinander verbunden.

Nach den Figuren 3 und 4 liegen entsprechend Figur 1 ein F-förmiger Formschluß 3 vor.

Nach Figur 4 ist der Klip 10 in eine Bohrung 15 eines Bleches 16 mittels einer Raste 17 und einer elastischen Schicht 18 befestigt. Die Raste 17 ist einstückig mit einer federnden Zunge 19. Die Schicht 18 ist Bestandteil des Balgs 1.

## Patentansprüche

1. Verbindung zwischen einem elastischen Teil und einem harten Kunststoffteil,
dadurch gekennzeichnet,
daß das elastische Teil (1) aus einem thermoplastischen Elastomer (TPE) und
der Kunststoffteil (10) aus Polypropylen oder Polyamid besteht,
und daß der elastische Teil (1) mit dem harten Kunststoffteil (10) unmittelbar - ohne zusätzliche adhäsive Verbindungstechnik, wie Verwendung von Klebstoffen, Haftmittel usw. - verbunden ist.

2. Verbindung nach Anspruch 1,
dadurch gekennzeichnet,
daß das elastische Teil (1) - im Querschnitt gesehen - einen L- oder F-förmigen Verbindungsteil (3, 4) aufweist und ein Flansch (14) des Kunststoffteils (10) damit verbunden ist.

3. Verbindung nach Anspruch 1,
dadurch gekennzeichnet,
daß das elastische Teil (1) einen Verbindungsteil (5) aufweist,
der Verbindungsteil (5) gebildet ist aus einem Rohrabschnitt (6), einem Bund (2), einem Bundabschnitt (7) und einer Lippe (8),
wobei die Lippe (8) zur Bildung einer Tasche (9) etwa parallel zum Bund (2) verläuft.
